# EUROPEAN PATENT APPLICATION

(11) **EP 4 790 851 A1**
(43) Date of publication of application: **12.08.2026**
(21) Application number: 26156095.7
(22) Date of filing: 03.02.2026
(51) Int. Cl.: H01R 29/00, H01R 31/08, H02K 3/28

(54) **A STAR DELTA CONVERTIBLE CONNECTOR AND METHOD OF OPERATING THE SAME**

(30) Priority: 06.02.2025 IN 202511009751
(71) Applicant: Vertiv Corporation, Westerville, OH 43082 (US)
(72) Inventor: VICHARE, OMKAR, Westerville, 43082 (US); AGHANE, MANALI, Westerville, 43082 (US)
(74) Representative: Cousens, Nico

(57) **Abstract**

Star-delta convertible connector (200) and method of operating the same for selectively establishing a star configuration or a delta configuration in a three-phase power distribution system are disclosed. The connector includes a socket assembly (202) having multiple receptacles electrically coupled to corresponding terminals and arranged to receive phase conductors and, selectively, neutral conductors, as well as an interchange plug receptacle. The interchange plug (204) includes prongs carrying at least one conductive busbar (222) configured to establish different electrical interconnections based on plug orientation. In a first orientation, the busbar electrically interconnects phase conductors with neutral conductors to establish a star configuration, and in a second orientation, the busbar electrically interconnects phase conductors with one another to establish a delta configuration. Switching between configurations is accomplished by removing the interchange plug, reorienting the interchange plug by approximately 180 degrees, and reinserting the interchange plug, without rewiring, disassembly, or removal of the socket assembly.

## Description

This patent application claims priority to Indian Patent Application No. IN 202511009751, filed on February 06, 2025, entitled "A Star Delta Convertible Connector And A Method Of Operating The Same".

### FIELD OF THE INVENTION

The present disclosure relates to power circuit, and particularly, to a star delta convertible power connecter and a method of operating the same.

### BACKGROUND OF THE INVENTION

Background description includes information that may be useful in understanding the present disclosure.

In modern data centers, DC power systems often need to accommodate different or regional AC power input requirements, which may require switching between star (wye) and delta configurations. These configurations play a significant role in managing voltage, current distribution, and load handling for critical equipment such as rectifiers, transformers, and power distribution units. However, meeting these regional or different AC input requirements often involves modifying the input connections of the DC power system by disassembling mechanical parts, which leads to significant downtime and the need for specialized electrical expertise. This process introduces inefficiencies and potential risks, particularly in environments where continuous operation and minimal disruption are essential.

Currently, when the power system requires a change from a star to a delta configuration or vice versa, the entire setup must be manually reconfigured. This involves physically dismantling parts of the system, which not only takes a considerable amount of time but also increases the chances of human error during reconfiguration. As a result, this manual process can cause compatibility issues, power interruptions, and delays in restoring the system to its optimal operational state. Given that downtime can negatively impact data center performance, this process undermines system efficiency and overall competitiveness.

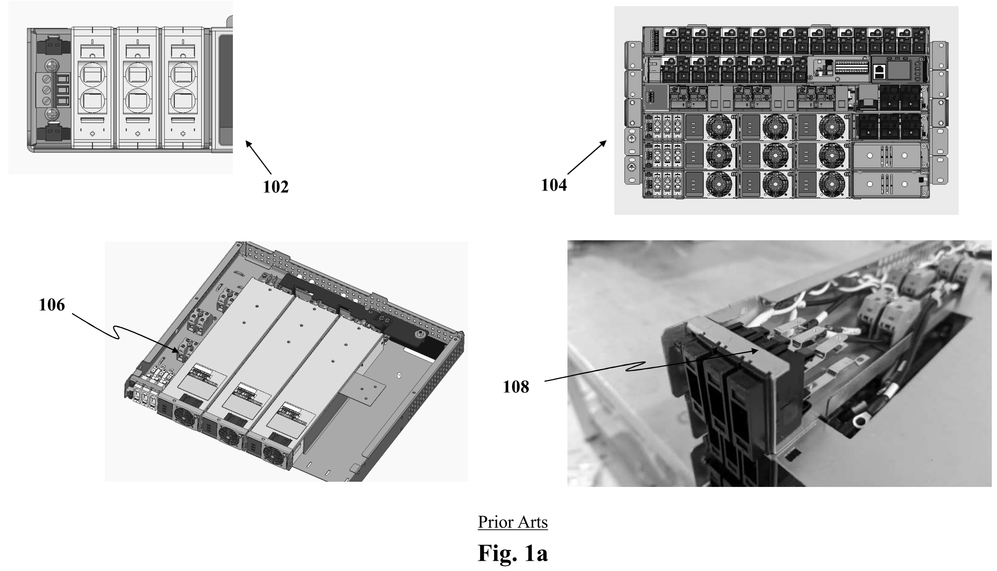

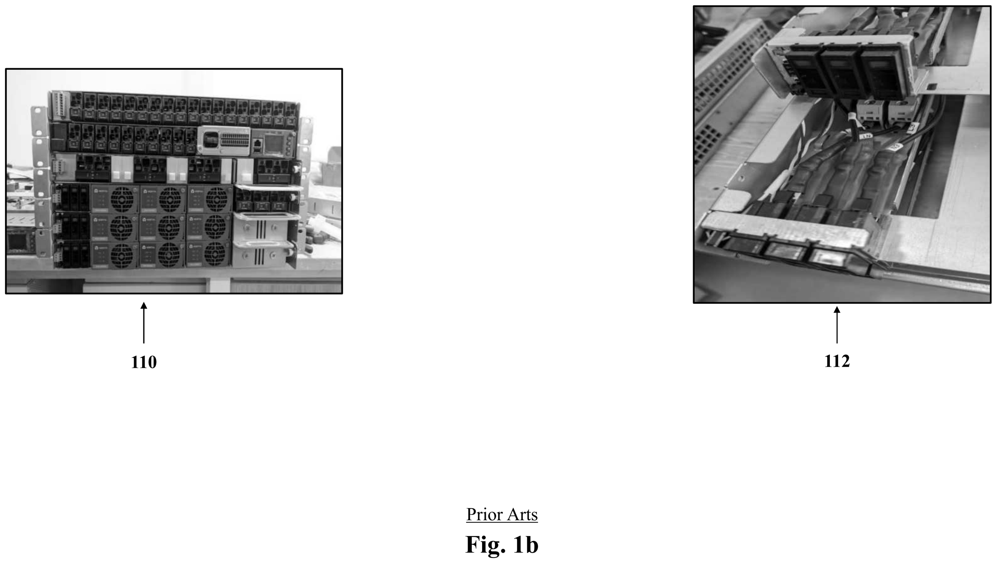

Fig. 1a & 1b illustrates the prior art, the conventional mechanism of Star Delta connection in 1RU System requires substantial manual intervention to modify the AC connection (102) and configure the rectifier shelf (104, 108) with the distribution block for star-delta interchange (106). The system further requires removing the uppermost shelf to access the star-delta connections (112), which complicates onsite adjustments. This mechanism makes it difficult for technicians to quickly and efficiently create star connections within the system (110), highlighting the difficulties faced when making these adjustments on-site. Such complexities lead to increased downtime and operational delays, particularly when changes in power requirements or configurations need to be implemented promptly.

The process of manually switching between star and delta connections requires both time and expertise, and it often results in system inefficiencies. Data centers, which rely on the continuous operation of their power systems, cannot afford the disruption caused by such lengthy reconfigurations. Additionally, the reliance on specialized personnel for these tasks creates a bottleneck, further slowing down response times to critical changes in power system requirements. This situation becomes especially problematic when there are urgent needs to adjust configurations based on changing operational conditions, leading to delays that impact overall performance and reduce system flexibility.

Given the increasing demands for efficiency and reduced downtime in data centers, there is a pressing need for a solution that allows for seamless, efficient switching between star and delta configurations without the need for extensive manual intervention or technical expertise.

### SUMMARY

This summary is provided to introduce concepts related to power circuits, and particularly, to a star-delta convertible power connector and a method of operating the same. This summary is not intended to identify key features or essential features of the claimed subject matter, nor is it intended to be used to limit the scope of the claimed subject matter.

In an aspect of the present disclosure, a convertible electrical connector selectively configurable between a star configuration and a delta configuration in a three-phase power distribution system is described. The convertible electrical connector includes a socket assembly and an interchange plug. The socket assembly includes a plurality of receptacles arranged to receive phase conductors and, selectively, neutral conductors. The socket assembly further includes a plurality of terminals electrically coupled to corresponding electrical loads. The interchange plug is removably insertable into the socket assembly in at least a first orientation and a second orientation distinct from the first orientation, wherein the interchange plug includes at least one conductive busbar positioned such that: when the interchange plug is inserted into the socket assembly in the first orientation, the at least one busbar electrically interconnects selected terminals to establish phase-to-neutral electrical connections corresponding to the star configuration. When the interchange plug is inserted into the socket assembly in the second orientation, the at least one busbar electrically interconnects selected terminals to establish phase-to-phase electrical connections corresponding to the delta configuration. The conversion between the star configuration and the delta configuration is achieved without rewiring or disassembly of the socket assembly.

In at least one embodiment, the plurality of receptacles includes three receptacles corresponding to three respective phases of the three-phase power distribution system.

In at least one embodiment, the receptacles are symmetrically aligned along a front face of the socket assembly to facilitate accurate insertion of the interchange plug.

In at least one embodiment, the terminals of the socket assembly include electrically isolated first and second terminal rows to prevent unintentional electrical contact prior to insertion of the interchange plug.

In at least one embodiment, the socket assembly further includes an enclosure and a cover formed of an insulating material and configured to retain the terminals and receptacles in fixed positions.

In at least one embodiment, the interchange plug includes a plurality of insulating portions carrying respective busbars, each busbar extending along an insertion-end surface and defining a non-conductive strip portion that electrically isolates conductors in the star configuration.

In at least one embodiment, in the star configuration, the busbar electrically interconnects each phase conductor with a respective neutral conductor in a one-to-one configuration.

In at least one embodiment, in the delta configuration, the busbar electrically interconnects the plurality of phase conductors in pairs to establish phase-to-phase electrical connections corresponding to a delta topology.

In at least one embodiment, the interchange plug further includes a manually operable knob made of insulating material to enable reorientation of the interchange plug between the star and delta configurations.

In at least one embodiment, the interchange plug further includes visual indicators or color coding identifying the respective configurations.

In at least one embodiment, the socket assembly is integrated within a rectifier shelf or power distribution module and configured to allow configuration switching without removing mechanical components or disconnecting wires.

In at least one embodiment, the busbar is formed of copper or another conductive metal, and a body of the interchange plug and an enclosure of the socket assembly are formed of polycarbonate or an equivalent insulating material.

In at least one embodiment, the convertible electrical connector is configured to maintain continuous electrical service to downstream loads during an orientation change of the interchange plug.

In at least one embodiment, the interchange plug is rotatable through approximately 180 degrees between the first and second orientations.

In another aspect of the present disclosure, a method of operating a star-delta convertible connector for switching between a star configuration and a delta configuration in a three-phase power distribution system is described. The method includes inserting an interchange plug into a socket assembly in a first orientation such that at least one conductive busbar electrically interconnects phase conductors and neutral conductors to establish the star configuration. The method further includes removing the interchange plug from the socket assembly and reorienting the interchange plug to a second orientation distinct from the first orientation while the socket assembly remains mechanically installed. The method further includes reinserting the interchange plug into the socket assembly in the second orientation such that the at least one conductive busbar electrically interconnects phase conductors to establish the delta configuration, wherein switching between the star configuration and the delta configuration is performed without rewiring or disassembly of the socket assembly.

In at least one embodiment, the method further includes mounting the socket assembly within a rectifier prior to establishing the first configuration.

In at least one embodiment, the first configuration provides phase-to-neutral power and the second configuration provides phase-to-phase power to a load.

In at least one embodiment, reorienting the interchange plug includes rotating the interchange plug about its longitudinal axis by approximately 180 degrees.

In at least one embodiment, reorienting the interchange plug is performed by grasping a front-mounted knob of the interchange plug.

In at least one embodiment, the method further includes visually confirming the orientation of the interchange plug using an indicator or color code provided on the body of the interchange plug.

In at least one embodiment, configuration switching is executed without removing or altering any shelves or wiring within the power distribution system.

In at least one embodiment, the method further includes maintaining the phase conductors coupled to the socket assembly while changing only the orientation of the interchange plug.

In at least one embodiment, the convertible electrical connector remains mechanically secured within the rectifier shelf during reorientation to prevent accidental disengagement of conductors.

Various objects, features, aspects, and advantages of the inventive subject matter will become more apparent from the following detailed description of preferred embodiments, along with the accompanying drawing figures, in which like numerals represent like components.

### BRIEF DESCRIPTION OF DRAWINGS

The illustrated embodiments of the subject matter will be understood by reference to the drawings, wherein like parts are designated by like numerals throughout. The following description is intended only by way of example and simply illustrates certain selected embodiments of devices, apparatus, systems, and methods that are consistent with the subject matter as claimed herein, wherein:
FIGs. 1a-1b illustrate star delta connection mechanism implemented in 1RU system by opening and removing shelf or connections of wires, in accordance with the prior arts;
FIG. 2a illustrates structural features of the star delta convertible connector, in accordance with an exemplary embodiment of the present disclosure;
FIG. 2b illustrates exploded view of the star delta convertible connector, in accordance with an exemplary embodiment of the present disclosure;
FIGs. 3a-3b illustrate a star connection formed using the star-delta convertible connector, in accordance with an exemplary embodiment of the present disclosure;
FIGs. 4a-4b illustrate a delta connection formed using the star-delta convertible connector, in accordance with an exemplary embodiment of the present disclosure;
FIG. 5a illustrates a star delta convertible connector implemented without removing any shelf or connections of wires, in accordance with an exemplary embodiment of the present disclosure;
FIG. 5b illustrates interchange process for converting the star connection to delta connection, in accordance with an exemplary embodiment of the present disclosure; and
FIG. 6 illustrates a method of operating a star-delta convertible connecter, in accordance with an exemplary embodiment of the present disclosure.

The figures depict embodiments of the present subject matter for the purposes of illustration only. A person skilled in the art will easily recognize from the following description that alternative embodiments of the structures and methods illustrated herein may be employed without departing from the principles of the disclosure described herein.

### DETAILED DESCRIPTION

The following is a detailed description of embodiments of the disclosure depicted in the accompanying drawings. The embodiments are in such detail as to clearly communicate the disclosure. However, the amount of detail offered is not intended to limit the anticipated variations of embodiments; on the contrary, the intention is to cover all modifications and alternatives falling within the scope of the present disclosure as defined by the appended claims.

While the embodiments of the disclosure are subject to various modifications and alternative forms, specific embodiments thereof have been shown by way of example in the figures and will be described below. It should be understood, however, that it is not intended to limit the disclosure to the particular forms disclosed, but on the contrary, the disclosure is to cover all modifications and alternatives falling within the scope of the disclosure.

It will be understood by those skilled in the art that the foregoing general description and the following detailed description are exemplary and explanatory of the disclosure and are not intended to be restrictive thereof. In the present document, the word "exemplary" is used herein to mean "serving as an example, instance, or illustration." Any embodiment or implementation of the present subject matter described herein as "exemplary" is not necessarily to be construed as preferred or advantageous over other embodiments.

The terms "comprises", "comprising", or any other variations thereof used in the disclosure, are intended to cover a non-exclusive inclusion, such that a device, system, or assembly that comprises a list of components does not include only those components but may include other components not expressly listed or inherent to such system, or assembly, or device. In other words, one or more elements in a system or device proceeded by "comprises... a" does not, without more constraints, preclude the existence of other elements or additional elements in the system or device.

The present disclosure relates to a star-delta convertible electrical connector selectively configurable between a star configuration and a delta configuration in a three-phase power distribution system. The connector includes a socket assembly and a removable star-delta interchange plug. The socket assembly includes a front face having a plurality of receptacles arranged to receive phase conductors and, selectively, neutral conductors, and a rear face having a plurality of terminals electrically coupled to corresponding electrical loads, for example through a rectifier.

In at least one embodiment, the plurality of receptacles includes receptacles adapted to receive live phase conductors (L1, L2, L3) from an external power supply, receptacles adapted to selectively receive neutral conductors (N1, N2, N3) when operating in a star configuration and to remain unoccupied when operating in a delta configuration, and receptacles configured to receive the star-delta interchange plug. The receptacles configured for phase conductors and the receptacles configured for neutral conductors are electrically isolated from one another to prevent unintended electrical connections prior to insertion of the interchange plug.

The plurality of terminals of the socket assembly are electrically coupled to corresponding receptacles and to the electrical loads. In at least one embodiment, the terminals include terminals associated with phase conductors and terminals associated with neutral conductors, which are physically spaced apart and electrically isolated within the socket assembly. The terminals associated with phase conductors are configured to couple the phase conductors to the electrical loads, while the terminals associated with neutral conductors are selectively interconnected, via the star-delta interchange plug, either to neutral conductors to establish the star configuration or to phase conductors to establish the delta configuration.

The star-delta interchange plug includes a plurality of prongs extending from a rear face of the plug and dimensioned for insertion into corresponding receptacles of the socket assembly. The interchange plug includes at least one conductive busbar positioned on the prongs and extending along an insertion end surface thereof. The geometry of the busbar defines at least one non-conductive strip portion that, in a first orientation of the interchange plug, maintains electrical separation between selected terminals.

When the interchange plug is inserted into the socket assembly in a first orientation corresponding to the star configuration, the at least one busbar electrically interconnects selected terminals to establish phase-to-neutral electrical connections between phase conductors and respective neutral conductors. In an exemplary embodiment, the busbar establishes one-to-one phase-to-neutral connections for supplying phase-to-neutral power to the electrical loads. When the interchange plug is removed, reoriented, and reinserted into the socket assembly in a second orientation corresponding to the delta configuration, the at least one busbar electrically interconnects selected terminals to establish phase-to-phase electrical connections between pairs of phase conductors, while neutral conductors are disconnected from the socket assembly.

In this manner, the electrical configuration of the power distribution system is selectively changed between the star configuration and the delta configuration by removing, reorienting, and reinserting the interchange plug, without requiring rewiring or disassembly of the socket assembly, and without removing the socket assembly from an installed rectifier shelf or power distribution module.

For better understanding, one or more embodiments of the present disclosure shall be described with respect to the earlier-mentioned drawings.

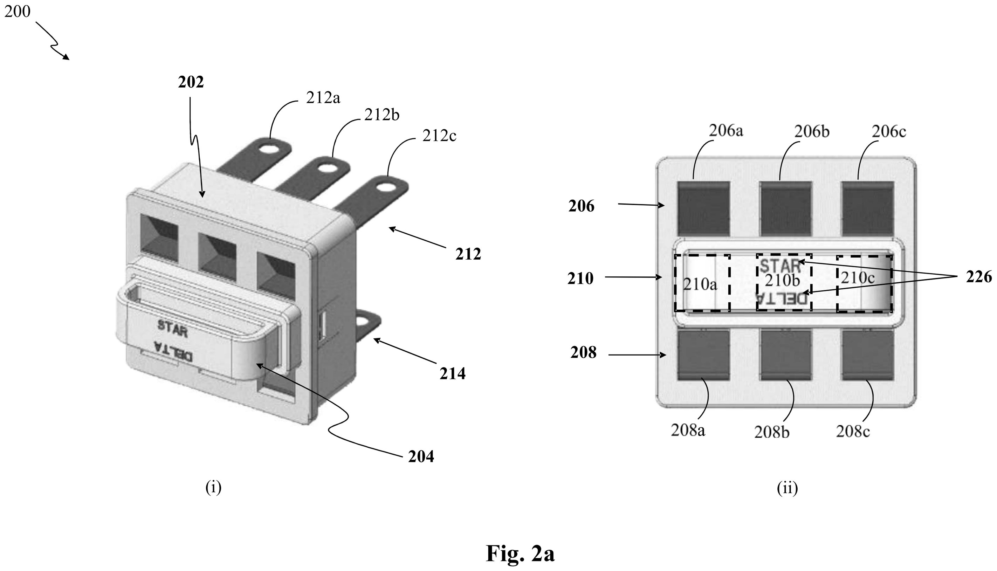

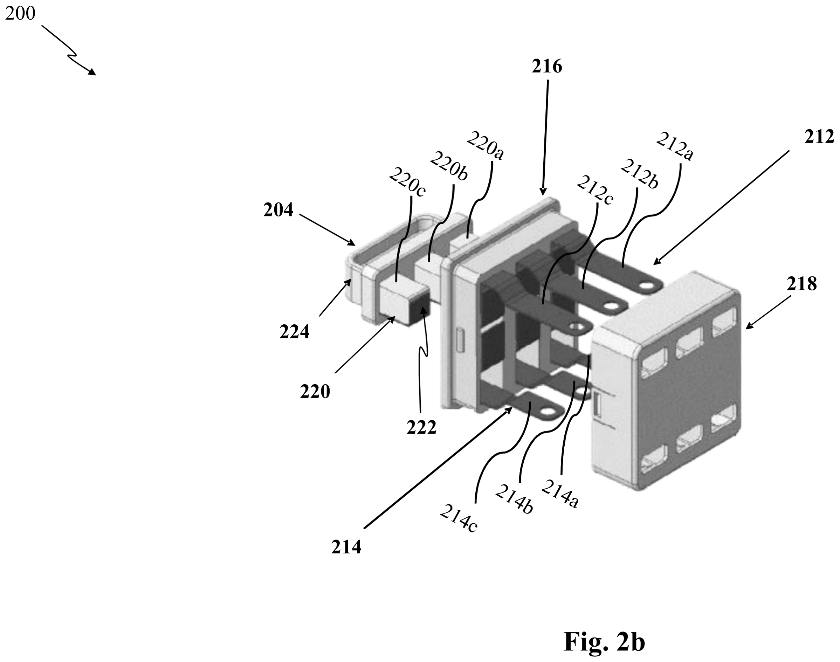

FIG. 2a illustrates an assembled structural view of a star-delta convertible connector (200), in accordance with an exemplary embodiment of the present disclosure. FIG. 2b illustrates an exploded view of the star-delta convertible connector (200), showing the internal arrangement and assembly relationship of components within the connector.

As illustrated in FIGS. 2a and 2b, the star-delta convertible connector (200) includes a socket assembly (202) and a removable star-delta interchange plug (204). The socket assembly (202) is configured to receive external power conductors and to electrically couple the received conductors to internal electrical loads through a rectifier, while the interchange plug (204) selectively establishes either a star configuration or a delta configuration based on its orientation within the socket assembly (202).

In at least one embodiment, the socket assembly (202) includes a plurality of rows of receptacles positioned at a front face thereof and a plurality of rows of terminals positioned at a rear face thereof. As shown in FIGS. 2a and 2b, the rows of receptacles include a first row of receptacles (206a, 206b, 206c), a second row of receptacles (208a, 208b, 208c), and a third row of receptacles (210a, 210b, 210c), the third row of receptacles being configured to receive the star-delta interchange plug (204).

The first row of receptacles (206a-206c) is adapted to receive live phase conductors (L1, L2, L3) from an external three-phase power supply. The second row of receptacles (208a-208c) is adapted to receive neutral conductors (N1, N2, N3) when the connector operates in the star configuration and to remain unoccupied when the connector operates in the delta configuration.

In at least one embodiment, the third row of receptacles (210a-210c) is positioned between the first row of receptacles (206a-206c) and the second row of receptacles (208a-208c) and is symmetrically aligned therebetween to facilitate accurate insertion and orientation of the interchange plug (204).

The plurality of rows of terminals positioned at the rear face of the socket assembly includes a first row of terminals (212a, 212b, 212c) corresponding to the first row of receptacles (206a-206c) and a second row of terminals (214a, 214b, 214c) corresponding to the second row of receptacles (208a-208c). The first and second rows of terminals (212, 214) are physically spaced apart and electrically isolated from one another within the socket assembly (202) to prevent unintended electrical contact prior to insertion of the interchange plug (204).

In at least one embodiment, the first row of terminals (212a-212c) is electrically coupled to the live phase conductors received by the first row of receptacles (206a-206c), and the second row of terminals (214a-214c) is selectively coupled, depending on the orientation of the interchange plug (204), either to neutral conductors to establish the star configuration or to phase conductors to establish the delta configuration.

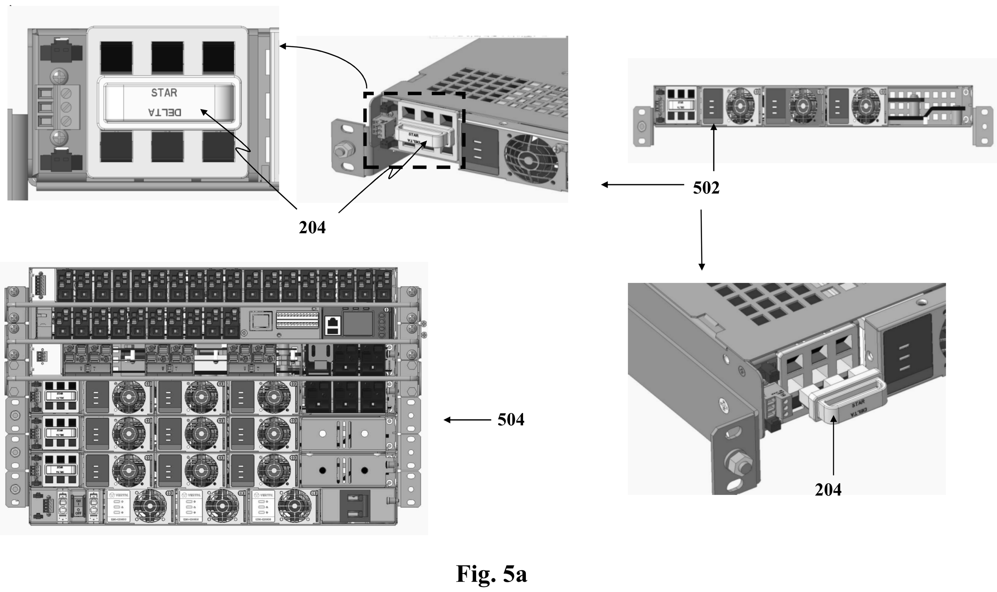

In at least one embodiment, the first and second rows of terminals (212, 214) are connected at one end to the respective receptacles and at another end to internal electrical loads through a rectifier (502), as illustrated in FIG. 5a.

Each of the first and second rows of terminals (212, 214) includes three terminals configured to securely retain conductors and provide reliable electrical contact during operation.

In at least one embodiment, the socket assembly (202) further includes an enclosure (216) and a cover (218), each formed of an insulating material, configured to retain the terminals and receptacles in fixed positions and to prevent accidental user contact with conductive components.

The star-delta interchange plug (204) includes a plurality of prongs (220a-220c) extending from a rear face of the plug and dimensioned for insertion into corresponding receptacles of the third row of receptacles of the socket assembly.

In at least one embodiment, the prongs (220) are formed of insulating material and function as mechanical carriers for conductive busbars (222, 222') disposed thereon.

Each prong includes a busbar extending along an insertion end surface of the prong. The busbar is formed of a conductive material and is positioned to electrically bridge selected terminals of the socket assembly when the interchange plug is inserted.

In the illustrated embodiment, each prong carries a respective busbar, although in other embodiments a single busbar may extend across multiple prongs

In at least one embodiment, the busbar extends along only a portion of the insertion end surface of the prong and defines a non-conductive strip portion along an opposing portion of the insertion end surface, thereby maintaining electrical isolation between selected terminals in at least one configuration.

When the interchange plug (204) is inserted into the socket assembly in a first orientation corresponding to the star configuration, the busbar (222) establishes phase-to-neutral electrical connections between terminals corresponding to phase conductors and terminals corresponding to neutral conductors, while the non-conductive strip maintains separation between other terminal portions.

In one exemplary star configuration, the busbar interconnects phase conductor L1 with neutral conductor N3, phase conductor L2 with neutral conductor N1, and phase conductor L3 with neutral conductor N2.

When the interchange plug (204) is removed, rotated by approximately 180 degrees, and reinserted into the socket assembly in a second orientation corresponding to the delta configuration, the busbar (222') is repositioned to establish phase-to-phase electrical connections between selected phase terminals.

In one exemplary delta configuration, the busbar interconnects phase conductor L1 with phase conductor L3, phase conductor L2 with phase conductor L1, and phase conductor L3 with phase conductor L2, and the neutral conductors are electrically disconnected from the socket assembly.

In at least one embodiment, the interchange plug (204) includes a manually operable knob (224) formed of insulating material and positioned at a front face of the plug to facilitate gripping, removal, rotation, and reinsertion of the plug between the first and second orientations.

In at least one embodiment, the interchange plug includes visual indicators (226), such as text or color coding, identifying the orientation corresponding to the star configuration and the delta configuration.

The cooperative interaction between the socket assembly (202) and the star-delta interchange plug (204) enables selective reconfiguration of a three-phase power distribution system between star and delta configurations solely by changing the orientation of the interchange plug, without requiring rewiring, mechanical disassembly, or removal of the socket assembly from an installed rectifier shelf or power distribution module.

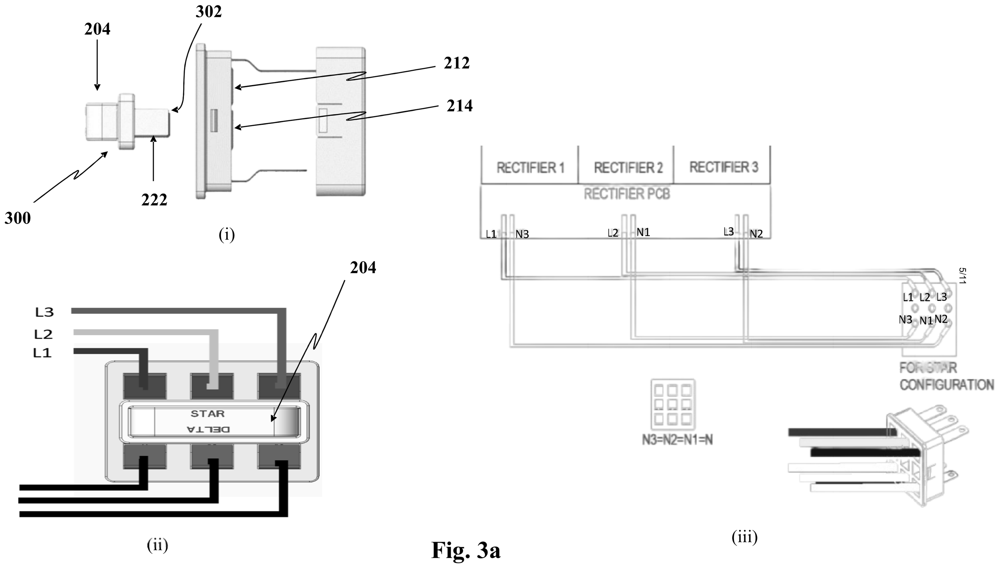

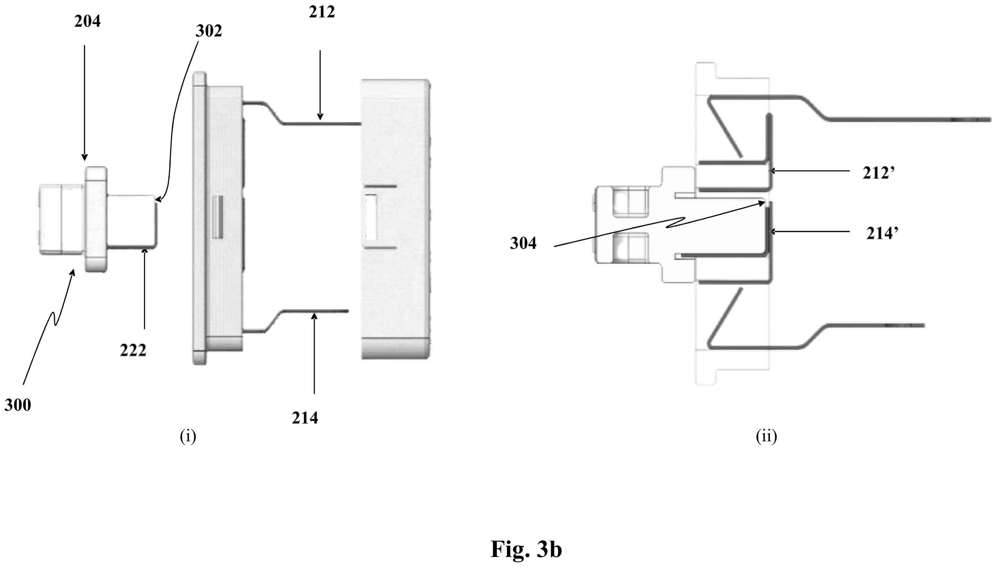

FIG. 3 illustrates establishment of a star configuration using the star-delta convertible connector (200), in accordance with an exemplary embodiment of the present disclosure. FIGS. 3a(i)-3a(iii) illustrate a functional sequence for establishing the star configuration, while FIGS. 3b(i)-3b(ii) illustrate side-profile views of the mechanical and electrical interface between the star-delta interchange plug (204) and terminals of the socket assembly in the star configuration.

As shown in FIG. 3a(i), the star-delta interchange plug (204) is arranged in a first orientation (300) corresponding to the star configuration. In this orientation, a conductive busbar (222) is disposed along a lower portion of an insertion end surface of each prong (220), while an upper portion of the insertion end surface defines a non-conductive horizontal strip (302). Prior to insertion of the interchange plug (204) into the socket assembly, the first row of terminals (212) and the second row of terminals (214) remain electrically isolated from one another.

FIG. 3a(ii) illustrates insertion of the interchange plug (204) into the third row of receptacles (210a-210c) of the socket assembly (202) while the plug is maintained in the first orientation (300). As previously described, the third row of receptacles (210) is positioned between the first row of receptacles (206a-206c) configured to receive phase conductors (L1, L2, L3) and the second row of receptacles (208a-208c) configured to receive neutral conductors (N1, N2, N3). Upon insertion of the interchange plug in this orientation, the busbars (222) mechanically and electrically bridge selected terminals of the first row of terminals (212a-212c) and the second row of terminals (214a-214c), thereby establishing controlled phase-to-neutral electrical connections.

As shown in FIG. 3a(iii), the established phase-to-neutral interconnections supply phase-to-neutral power to individual rectifiers. In at least one exemplary embodiment, Rectifier 1 receives phase conductor L1 connected to neutral conductor N3, Rectifier 2 receives phase conductor L2 connected to neutral conductor N1, and Rectifier 3 receives phase conductor L3 connected to neutral conductor N2. The neutral conductors are electrically common, thereby forming a standard star (wye) configuration. The conductive busbars (222) of the interchange plug (204) provide the defined conductive paths required to establish these interconnections.

FIG. 3b(i) illustrates a side-profile view of the star-delta interchange plug (204) in the first orientation (300) relative to the terminals of the socket assembly. Each prong (220) is positioned between the first row of terminals (212), corresponding to the phase conductors (L1, L2, L3), and the second row of terminals (214), corresponding to the neutral conductors (N1, N2, N3). In this orientation, the conductive busbar (222) is located along the lower portion of the prong, while the non-conductive horizontal strip (302) occupies the upper portion of the insertion end surface.

As shown in FIG. 3b(ii), when the interchange plug (204) is fully seated in the socket assembly (202) in the star configuration, a defined electrical gap (304) is maintained between portions of the first row of terminals (212') and the second row of terminals (214') due to the presence of the non-conductive horizontal strip (302). This gap prevents unintended electrical contact and short-circuiting between phase and neutral conductors. Electrical connection between the phase conductors and neutral conductors is established only at locations bridged by the conductive busbar (222), thereby ensuring safe, controlled, and reliable phase-to-neutral operation in the star configuration.

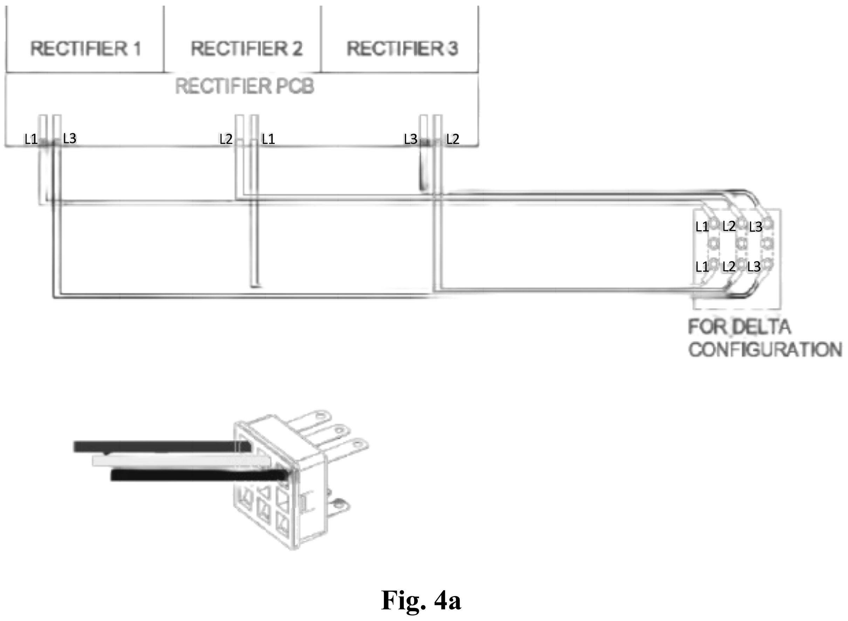

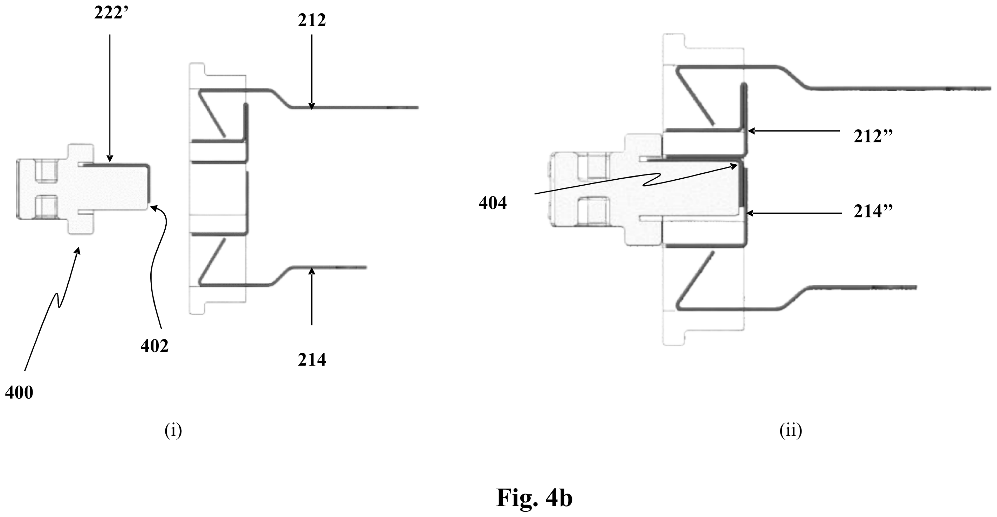

FIGS. 4a and 4b illustrate establishment of a delta configuration using the star-delta convertible connector (200), in accordance with an exemplary embodiment of the present disclosure. In the delta configuration, the connector supplies phase-to-phase electrical power to downstream electrical loads, such as rectifiers, rather than the phase-to-neutral power supplied in the star configuration described with reference to FIG. 3.

As illustrated, the delta configuration is established by removing the star-delta interchange plug (204) from the socket assembly (202), rotating the interchange plug approximately 180 degrees about its longitudinal axis to a second orientation (400), and reinserting the interchange plug into the third row of receptacles (210a-210c). This reorientation changes the relative position of conductive and non-conductive portions of the prongs (220), thereby altering the alignment of at least one conductive busbar within the plug relative to terminals of the socket assembly and reconfiguring the electrical interconnections.

FIG. 4a illustrates the resulting electrical routing logic established on a rectifier printed circuit board when the connector is configured in the delta configuration. In this arrangement, phase conductors (L1, L2, L3) are electrically paired with one another rather than with neutral conductors. In at least one exemplary embodiment, Rectifier 1 receives phase conductor L1 electrically connected to phase conductor L3, Rectifier 2 receives phase conductor L2 electrically connected to phase conductor L1, and Rectifier 3 receives phase conductor L3 electrically connected to phase conductor L2. These phase-to-phase interconnections provide the required delta power supply to each rectifier.

In the delta configuration, the neutral conductors (N1, N2, N3) used in the star configuration are not utilized to supply power to the rectifiers. Instead, the second row of terminals (214) of the socket assembly is electrically associated with phase conductors such that both the first row of terminals (212) and the second row of terminals (214) are coupled to phase conductors (L1, L2, L3), as indicated by reference numerals (212") and (214") in FIG. 4b(ii). Neutral conductors may be disconnected, left unconnected, or otherwise rendered electrically inactive during delta operation.

FIG. 4b(i) illustrates a side-profile view of the star-delta interchange plug (204) arranged in the second orientation (400). In this orientation, a conductive busbar (222') is positioned along an upper portion of the insertion end surface of each prong (220), while a non-conductive horizontal strip (402) is positioned along a lower portion of the insertion end surface. In this orientation, the busbar (222') is aligned to physically and electrically bridge terminals of the first row (212) and the second row (214) of the socket assembly.

As shown in FIG. 4b(ii), when the interchange plug (204) is fully seated in the socket assembly (202) in the delta configuration, the busbar (222') establishes a continuous electrical path between phase conductors associated with the first row of terminals (212") and phase conductors associated with the second row of terminals (214"). In contrast to the star configuration, no insulating separation is maintained between the two rows of terminals. Instead, elimination of an insulating gap (404) enables direct phase-to-phase electrical connectivity through the busbar (222').

The electrical bridging provided by the busbar (222') in the second orientation (400) reroutes internal power distribution paths to supply phase-to-phase electrical power to the rectifiers in accordance with a delta topology. This reconfiguration is achieved without disassembly of the socket assembly (202), removal of mounted components, or alteration of wiring connections within the power distribution system.

In at least one embodiment, switching between the star configuration and the delta configuration is performed solely by reorienting the star-delta interchange plug (204). The connector is configured such that orientation-dependent positioning of conductive busbars (222, 222') and non-conductive strip portions (302, 402) selectively establishes or prevents electrical connections between terminal rows. This arrangement enables safe, repeatable, and tool-minimal conversion between star and delta configurations while maintaining mechanical stability, electrical reliability, and compliance with three-phase power distribution requirements.

FIG. 5a illustrates an implementation of the star-delta convertible connector (200) within a three-phase power distribution system, in accordance with an exemplary embodiment of the present disclosure. In the illustrated embodiment, the connector (200) is integrated within a rectifier shelf (502) and operatively coupled to a distribution block (504) that routes electrical power to downstream rectifiers and associated electrical loads.

As shown in FIG. 5a, the star-delta convertible connector (200) is mounted at an interface location that is readily accessible to an operator while remaining mechanically secured within the rectifier shelf (502). The connector is installed such that switching between star and delta configurations may be performed without removing the rectifier shelf (502), disassembling system components, or disturbing fixed wiring connections between the distribution block (504) and the rectifiers.

In at least one embodiment, the distribution block (504), rectifier shelf (502), and associated phase wiring remain mechanically and electrically intact during configuration changes. The star-delta convertible connector (200) is positioned to permit configuration switching solely by manipulation of the star-delta interchange plug (204), thereby reducing system downtime and minimizing the likelihood of wiring errors, loose connections, or electrical faults.

Unlike conventional three-phase power distribution systems that require physical disassembly, rewiring, or removal of shelves to accommodate different regional power standards, the implementation illustrated in FIG. 5a enables reconfiguration of the electrical topology while the rectifier shelf (502) remains installed and operational. This structural and functional integration provides a significant operational advantage over prior art solutions.

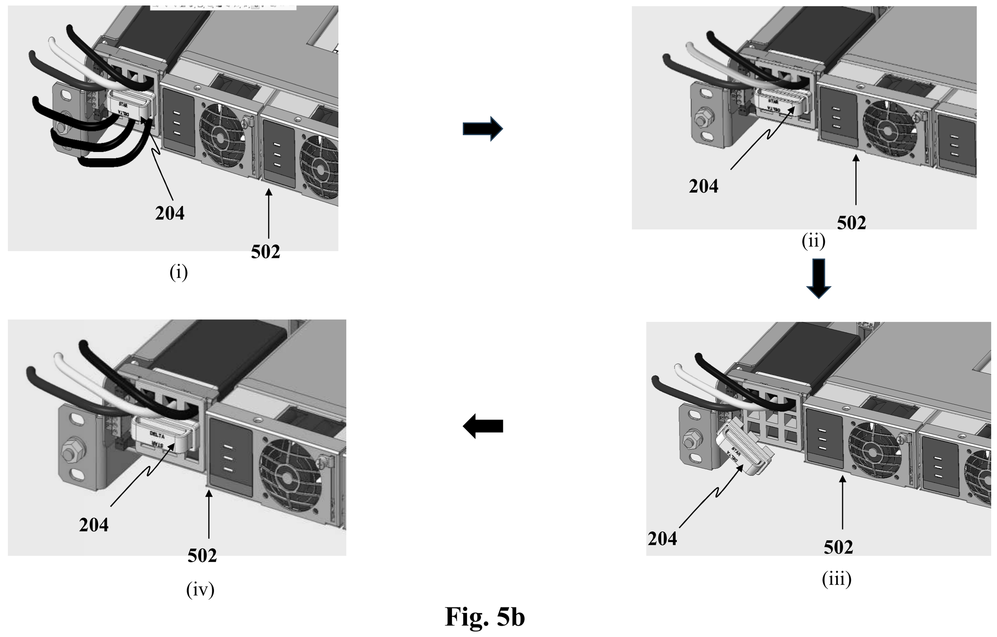

FIG. 5b illustrates an exemplary interchange process for converting the system from a star configuration to a delta configuration using the star-delta interchange plug (204). The illustrated sequence demonstrates that electrical reconfiguration is achieved through controlled manipulation of the interchange plug, without requiring modification of the socket assembly (202) or the distribution block (504).

As shown in FIG. 5b(i), the system is initially operating in the star configuration, in which phase conductors (L1, L2, L3) are electrically connected to neutral conductors (N1, N2, N3) through the star-delta interchange plug (204) inserted into the socket assembly (202) in its first orientation. In this configuration, at least one conductive busbar within the interchange plug establishes phase-to-neutral electrical paths corresponding to a star topology.

As shown in FIG. 5b(ii), in at least one embodiment, neutral conductors associated with the second row of receptacles (208) may be disconnected or otherwise rendered electrically inactive prior to establishing the delta configuration. Because phase-to-neutral connections are not required for delta operation, this step prepares the system for phase-to-phase power distribution and may be performed in accordance with applicable safety or installation requirements.

As shown in FIG. 5b(iii), the star-delta interchange plug (204) is removed from the socket assembly (202), for example by grasping an insulating knob (224) provided on a front face of the plug. The interchange plug is then rotated approximately 180 degrees about its longitudinal axis and reoriented to a second orientation corresponding to the delta configuration. Rotation of the plug repositions conductive busbar portions and non-conductive strip portions of the prongs relative to terminals within the socket assembly.

As shown in FIG. 5b(iv), the reoriented interchange plug (204) is reinserted into the third row of receptacles (210) of the socket assembly (202). In this second orientation, the conductive busbar establishes phase-to-phase electrical connections between selected phase conductors, including L1-L3, L2-L1, and L3-L2, thereby configuring the system in a delta topology and supplying phase-to-phase electrical power to the rectifiers.

In at least one embodiment, the star-delta convertible connector (200) is modular and scalable, and is configured for use in high-availability environments such as data centers. The connector enables rapid, repeatable switching between star and delta configurations with minimal manual intervention and without requiring specialized technical expertise. Use of insulating materials, such as polycarbonate, for an enclosure and cover of the socket assembly and the interchange plug enhances electrical safety and durability, while conductive components such as busbars and terminals provide reliable electrical performance over repeated configuration changes.

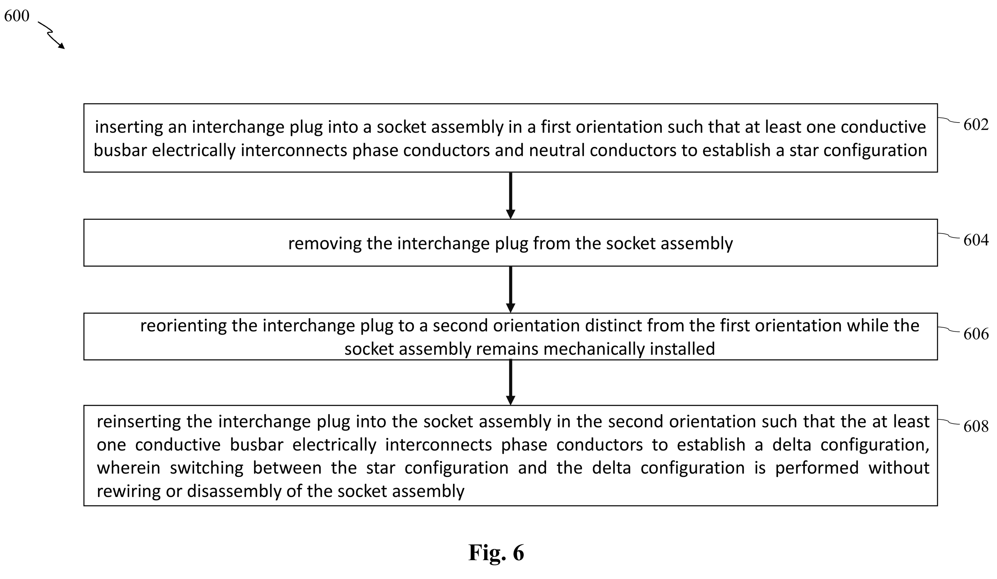

FIG. 6 illustrates a method (600) of operating a star-delta convertible connector (200) for selectively switching between a star configuration and a delta configuration in a three-phase power distribution system, in accordance with an exemplary embodiment of the present disclosure.

In at least one embodiment, the method (600) includes providing a star-delta convertible connector including a socket assembly (202) and a star-delta interchange plug (204). The interchange plug (204) is configured for removable insertion into the socket assembly (202) in at least two distinct orientations, each orientation establishing a different electrical configuration within the power distribution system. The socket assembly includes receptacles electrically coupled to corresponding terminals arranged to receive phase conductors and, in the star configuration, neutral conductors.

The method further includes establishing a star configuration by inserting (602) the star-delta interchange plug (204) into the socket assembly (202) in a first orientation (300). In this orientation, at least one conductive busbar disposed within the interchange plug electrically interconnects selected terminals associated with phase conductors and neutral conductors, thereby establishing phase-to-neutral electrical connections corresponding to a star topology and supplying phase-to-neutral power to one or more downstream electrical loads.

In at least one embodiment, establishing the star configuration includes coupling phase conductors (L1, L2, L3) to a first set of receptacles of the socket assembly (202), which are electrically connected to corresponding terminals, and coupling neutral conductors (N1, N2, N3) to a second set of receptacles of the socket assembly. The interchange plug (204) is inserted into a further set of receptacles positioned to electrically interface with terminals associated with both the phase conductors and the neutral conductors when the plug is in the first orientation.

When a change from the star configuration to the delta configuration is required, the method includes removing (604) the interchange plug (204) from the socket assembly (202) while the socket assembly remains mechanically installed within the power distribution system. In at least one embodiment, neutral conductors associated with the star configuration are disconnected or otherwise rendered electrically inactive prior to establishing the delta configuration, as phase-to-neutral connections are not required for delta operation.

The method further includes reorienting (606) the interchange plug (204) to a second orientation (400) distinct from the first orientation. Reorienting the interchange plug includes rotating the plug about its longitudinal axis, and in at least one embodiment, rotating the plug by approximately 180 degrees. This rotation repositions conductive and non-conductive portions of the interchange plug relative to terminals within the socket assembly.

The method further includes reinserting (608) the reoriented interchange plug (204) into the socket assembly (202) to establish the delta configuration. In the second orientation, the conductive busbar of the interchange plug electrically interconnects selected terminals associated with phase conductors, thereby establishing phase-to-phase electrical connections corresponding to a delta topology and supplying phase-to-phase power to the downstream electrical loads.

In at least one embodiment, the delta configuration includes establishing electrical connections between phase conductors L1 and L3, phase conductors L2 and L1, and phase conductors L3 and L2. Switching between the star configuration and the delta configuration is performed without rewiring or disassembly of the socket assembly, without removing or altering shelves or fixed wiring within the power distribution system, and while maintaining the phase conductors coupled to the socket assembly.

The star-delta convertible connector disclosed herein provides one or more of the following technical advantages:
- The connector enables selective switching between star and delta configurations by removal, reorientation, and reinsertion of an interchange plug, eliminating the need for mechanical disassembly, rewiring, or replacement of system components, thereby reducing configuration time and system disruption.
- Orientation-dependent electrical interconnection through at least one conductive busbar allows the same socket assembly to support both phase-to-neutral and phase-to-phase power topologies, improving system adaptability to different three-phase power standards.
- The use of a manually operable interchange plug, including a rotational reorientation mechanism and visual orientation indicators, allows configuration changes to be performed without specialized tools or advanced electrical expertise.
- Electrical isolation between terminal rows prior to insertion of the interchange plug, and controlled electrical bridging via the busbar upon insertion, enhances operational safety and reduces the risk of unintended electrical contact during configuration changes.
- Integration of the connector within a rectifier shelf or power distribution module enables configuration switching while the socket assembly remains mechanically installed and phase conductors remain coupled, thereby minimizing the likelihood of wiring errors and reducing maintenance complexity.
- The modular construction of the connector supports scalability and reuse across different power system installations, including high-availability environments such as data centers requiring regional configuration adaptability.
- By reducing the number of discrete components and manual reconfiguration steps required to change power topologies, the connector lowers installation and maintenance effort while improving repeatability and reliability of configuration changes.

It is understood that any specific order or hierarchy of blocks in the processes disclosed is an illustration of example approaches. Based upon design preferences, it is understood that the specific order or hierarchy of blocks in the processes may be rearranged, or that all illustrated blocks be performed. Any of the blocks may be performed simultaneously. In one or more implementations, the separation of various components in the implementations described above should not be understood as requiring such separation in all implementations, and it should be understood that the described components and systems can generally be integrated together in a single product or packaged into multiple products.

It should be noted that the description and figures merely illustrate the principles of the present subject matter. It should be appreciated by those skilled in the art that conception and specific embodiment disclosed may be readily utilized as a basis for modifying or designing other structures for carrying out the same purposes of the present subject matter. It should also be appreciated by those skilled in the art by devising various systems that, although not explicitly described or shown herein, embody the principles of the present subject matter and are included within its spirit and scope.

Furthermore, all examples recited herein are principally intended expressly to be for pedagogical purposes to aid the reader in understanding the principles of the present subject matter and the concepts contributed by the inventor(s) to further the art and are to be construed as being without limitation to such specifically recited examples and conditions. The novel features which are believed to be characteristic of the present subject matter, both as to its organization and method of operation, together with further objects and advantages will be better understood from the description when considered in connection with the accompanying figures.

Although embodiments for the present subject matter have been described in language specific to package features, it is to be understood that the present subject matter is not necessarily limited to the specific features described. Rather, the specific features and methods are disclosed as embodiments for the present subject matter. Numerous modifications and adaptations of the system/device of the present disclosure will be apparent to those skilled in the art, and thus it is intended by the appended claims to cover all such modifications and adaptations which fall within the scope of the present subject matter.

## Claims

1. A convertible electrical connector (200) selectively configurable between a star configuration and a delta configuration in a three-phase power distribution system, comprising:
a socket assembly (202) comprising:
a plurality of receptacles (206, 208) arranged to receive phase conductors, and selectively, neutral conductors; and
a plurality of terminals electrically coupled to corresponding electrical loads; and
an interchange plug (204) removably insertable into the socket assembly in at least a first orientation and a second orientation distinct from the first orientation;
wherein the interchange plug comprises at least one conductive busbar (222) positioned such that:
when the interchange plug is inserted into the socket assembly in the first orientation, the busbar electrically interconnects selected terminals to establish phase-to-neutral electrical connections corresponding to the star configuration, and
when the interchange plug is inserted into the socket assembly in the second orientation, the busbar electrically interconnects selected terminals to establish phase-to-phase electrical connections corresponding to the delta configuration,
such that conversion between the star configuration and the delta configuration is achieved without rewiring or disassembly of the socket assembly.

2. The connector of claim 1, wherein the plurality of receptacles comprises three receptacles corresponding to three respective phases of the three-phase power distribution system.

3. The connector of claim 1 or 2, wherein the receptacles are symmetrically aligned along a front face of the socket assembly to facilitate accurate insertion of the interchange plug.

4. The connector of any preceding claim, wherein the terminals of the socket assembly comprise electrically isolated first and second terminal rows to prevent unintentional electrical contact prior to insertion of the interchange plug, and wherein the socket assembly further comprises an enclosure (216) and a cover (218) formed of an insulating material configured to retain the terminals and receptacles in fixed position.

5. The connector of any preceding claim, wherein the interchange plug comprises a plurality of insulating portions carrying respective busbars, each busbar extending along an insertion end surface and defining a non-conductive strip portion (302) that electrically isolates conductors in the star configuration.

6. The connector of any preceding claim, wherein, in the star configuration, the busbar electrically interconnects each phase conductor with a respective neutral conductor in a one to one configuration.

7. The connector of any preceding claim, wherein, in the delta configuration, the busbar electrically interconnects the plurality of phase conductors in pairs to establish phase-to-phase electrical connections corresponding to a delta topology.

8. The connector of any preceding claim, wherein the interchange plug further comprises a manually operable knob (224) made of insulating material to enable reorientation of the interchange plug between the star and delta configurations, and wherein the interchange plug further comprises visual indicators or color coding identifying the respective configurations, and/or wherein the socket assembly is integrated within a rectifier shelf or power distribution module and configured to allow configuration switching without removing mechanical components or disconnecting wires, and wherein the interchange plug is rotatable through approximately 180 degrees between the first and second orientations.

9. The connector of any preceding claim, wherein the busbar is formed of copper or another conductive metal, and wherein a body of the interchange plug and an enclosure of the socket assembly are formed of polycarbonate or equivalent insulating material, and/or wherein the connector is configured to maintain continuous electrical service to downstream loads during orientation change of the plug.

10. A method (600) of operating a star-delta convertible connector for switching between a star configuration and a delta configuration in a three-phase power distribution system, comprising:
inserting (602) an interchange plug into a socket assembly in a first orientation such that at least one conductive busbar electrically interconnects phase conductors and neutral conductors to establish the star configuration;
removing (604) the interchange plug from the socket assembly;
reorienting (606) the interchange plug to a second orientation distinct from the first orientation while the socket assembly remains mechanically installed; and
reinserting (608) the interchange plug into the socket assembly in the second orientation such that the at least one conductive busbar electrically interconnects phase conductors to establish the delta configuration,
wherein switching between the star configuration and the delta configuration is performed without rewiring or disassembly of the socket assembly.

11. The method of claim 10, further comprising mounting the socket assembly within a rectifier prior to establishing the first configuration.

12. The method of claim 10 or 11, wherein the first configuration provides phase-to-neutral power and the second configuration provides phase-to-phase power to a load.

13. The method of any of claims 10 to 12, wherein reorienting the interchange plug comprises rotating the plug about its longitudinal axis by approximately 180 degrees, and/or wherein reorienting the interchange plug is performed by grasping a front-mounted knob of the interchange plug.

14. The method of any of claims 10 to 13, further comprising visually confirming the orientation of the interchange plug using an indicator or color code provided on the body of the interchange plug, and/or wherein the configuration switching is executed without removing or altering any shelves or wiring within the power distribution system.

15. The method of any of claims 10 to 14, further comprising maintaining the phase conductors coupled to the socket assembly while changing only the orientation of the interchange plug, and/or wherein the connector remains mechanically secured within a rectifier shelf during reorientation to prevent accidental disengagement of conductors.
